# EUROPEAN PATENT SPECIFICATION

(11) **EP 3 035 767 B1**
(45) Date of publication and mention of the grant of the patent: **15.04.2020**
(21) Application number: 14835822.9
(22) Date of filing: 06.03.2014
(51) Int. Cl.: H04W 74/08

(54) **METHOD, APPARATUS AND SYSTEM FOR CHANNEL ACCESS**
KANALZUGANGSVERFAHREN, -VORRICHTUNG UND -SYSTEM
PROCÉDÉ, APPAREIL ET SYSTÈME POUR UN ACCÈS À UN CANAL

(30) Priority: 15.08.2013 CN 201310356741
(43) Date of publication of application: 22.06.2016
(73) Proprietor: Huawei Technologies Co., Ltd., Longgang District Shenzhen, Guangdong 518129 (CN)
(72) Inventor: LI, Bo, Xi'an Shaanxi 710072 (CN); QU, Qiao, Xi'an Shaanxi 710072 (CN); LI, Yunbo, Shenzhen Guangdong 518129 (CN); WU, Tianyu, Shenzhen Guangdong 518129 (CN)
(74) Representative: Körber, Martin Hans
(86) International application number: PCT/CN2014/072957
(87) International publication number: WO 2015/021772

(56) References cited:
- WO-A1-2011/038154
- CN-A- 101 715 241
- CN-A- 102 076 106
- CN-A- 102 090 024
- CN-A- 102 625 466
- KR-A- 20100 011 141
- GEBRESELASSIE HAILE ET AL: "C-OFDMA: Improved Throughput for Next Generation WLAN Systems Based on OFDMA and CSMA/CA", INTELLIGENT SYSTEMS MODELLING&SIMULATION (ISMS), 2013 4TH INTERNATIONAL CONFERENCE ON, IEEE, 29 January 2013 (2013-01-29), pages 497-502, XP032364326, DOI: 10.1109/ISMS.2013.121 ISBN: 978-1-4673-5653-4

## Description

### TECHNICAL FIELD

The present invention relates to the technical field of wireless communications, and particularly to a channel access method, apparatus and system.

### BACKGROUND

IEEE 802.11 protocol provides detailed provisions for a data transmission process of a wireless local area network. A wireless local area network generally includes one access point (AP, Access Point) and a plurality of stations (STA, Station). If an STA has data that needs to be sent, the STA must first send the data to the AP, and then the AP forwards the data to other network node. Therefore, when there are a plurality of STAs in the wireless local area network which need to send data simultaneously, the STAs shall contend for channel resources.

The IEEE 802.11 protocol regulates that all STAs use a same channel to send a request to send frame to contend for channel resources. Therefore in the wireless local area network, when a plurality of STAs simultaneously send request to send frames, collision occurs, and the AP may be unable to correctly receive a request to send frame sent by any STA. One solution is to divide the channel into a plurality of sub-channels in frequency domain. An STA monitors a busy/idle state of each sub-channel to contend for channel resources on different sub-channels. However, since the STA needs to simultaneously monitor the busy/idle state of each sub-channel, a monitoring process of the STA is complex, and moreover, a time non-synchronization problem exists when a plurality of STAs perform channel access, resulting in severe adjacent band interference.

For example, if the channel is divided into two sub-channels and when STA1 monitors that the sub-channel 1 is in an idle state, the STA1 sends a request to send frame to the AP. In this case, while the STA1 sends the request to send frame, STA2 monitors that the sub-channel 2 is in an idle state, and the STA2 sends a request to send frame to the AP. Thus, the time non-synchronization problem exists when the STA1 and the STA2 perform channel access. The AP first receives the request to send frame sent by the STA1, and in a process of processing the request to send frame sent by the STA1, the AP receives the request to send frame sent by the STA2. The request to send frame sent by the STA2 generates severe interference to the request to send frame sent by the STA1, that is, a signal on the sub-channel 2 interferes with a signal on the sub-channel 1. Since each sub-channel occupies a certain bandwidth in frequency domain, signals at adjacent frequency bands interfere with each other severely.

CN 102076106 A discloses a time-frequency two-dimensional mixed MAC layer access method, in which a station point sends to an AP a Request to Send (RTS) frame, if it detects an idle sub-channel of a channel, and receives from the AP a Clear to send (CTS) frame.

Further, "C-OFDMA: Improved Throughput for next generation WLAN systems based on OFDMA and CSMA/CA", Intelligent systems modelling & simulation, 2013, 4th international conference on, IEEE, refers to improved throughput for next generation WLAN systems based on OFDMA and CSMA/CA.

Further, KR 2010/0011141A refers to a method of transmitting data in a very high throughput wireless LAN system and a station supporting the method to prevent collocation Interference in an adjacent sub channel.

### SUMMARY

The present invention provides a channel access method, apparatus and system in order to solve the above mentioned problem in the prior art of request interferences. The problem is solved essentially by simplifying a monitoring process of an STA, time synchronization can be satisfied when a plurality of STAs perform channel access, thereby avoiding signals at adjacent frequency bands interfere with each other.

This problem is solved by the subject matter of the independent claims. Further implementation forms are provided in the dependent claims.

The present invention provides a channel access method, apparatus and system, according to independent claim 1 and 9, respectively.

### BRIEF DESCRIPTION OF DRAWINGS

To illustrate the technical solutions of the present invention more clearly, the accompanying drawings are introduced which the description of embodiments of the present invention and the prior art will refer to below. Apparently, the accompanying drawings in the description below are merely some of the embodiments of the present invention.
FIG. 1 is a flowchart of a channel access method provided by an embodiment of the present invention;
FIG. 2 is a flowchart of a data transmission method after channel access success provided by an embodiment of the present invention;
FIG. 3 is a schematic diagram of channel division provided by an embodiment of the present invention;
FIG. 4 is a schematic diagram of a channel access scenario provided by an embodiment of the present invention;
FIG. 5 is a flowchart of a channel access method provided by an embodiment of the present invention;
FIG. 6 is a schematic diagram of a method for data transmission after channel access succeeds that is provided by an embodiment of the present invention;
FIG. 7 is a schematic diagram of another method for data transmission after channel access succeeds that is provided by an embodiment of the present invention;
FIG. 8 is a schematic diagram of an apparatus structure of a station provided by an embodiment of the present invention;
FIG. 9 is a schematic diagram of an apparatus structure of another station provided by an embodiment of the present invention;
FIG. 10 is a schematic diagram of an apparatus structure of another station provided by an embodiment of the present invention;
FIG. 11 is a schematic diagram of an apparatus structure of another station provided by an embodiment of the present invention;
FIG. 12 is a schematic diagram of an apparatus structure of another station provided by an embodiment of the present invention;
FIG. 13 is a schematic diagram of an apparatus structure of another station provided by an embodiment of the present invention; and
FIG. 14 is a schematic diagram of an entity apparatus structure of a station provided by an embodiment of the present invention.

### DESCRIPTION OF EMBODIMENTS

A clear and complete description of technical solutions of the present invention will be given below, with reference being made to the accompanying drawings showing embodiments of the present invention. Apparently, the embodiments described are merely a part, but not all, of the embodiments of the present invention.

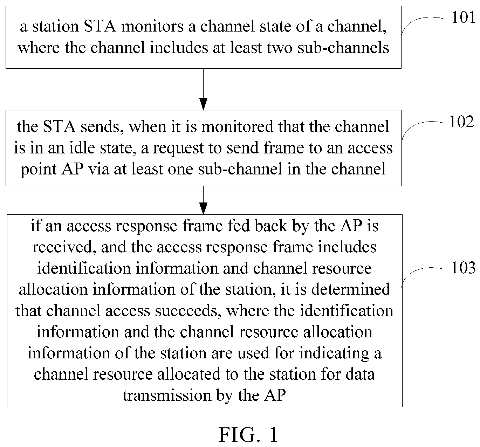

The present invention provides a channel access method. As shown in FIG. 1, the method includes the following steps.

Step 101, a station STA monitors a channel state of a channel, where the channel includes at least two sub-channels.

The channel state of the channel includes that the channel is in an idle state or the channel is in a busy state. The sub-channels contained in the channel are mutually orthogonal.

Specifically, the monitoring, by the station STA, the channel state of the channel includes that the STA monitors whether a strength of an energy signal in the entire channel reaches a preset threshold, where the threshold is a critical value capable of being reached by a strength of an energy signal in the entire channel, that is, if the STA monitors that the strength of an energy signal in the entire channel is larger than or equal to the preset threshold, the channel is in the busy state; and if the STA monitors that the strength of an energy signal in the entire channel is smaller than the preset threshold, the channel is in the idle state.

Exemplarily, if the channel is divided into two sub-channels, which are respectively marked as sub-channel 1 and sub-channel 2, the two sub-channels are mutually orthogonal; and meanwhile, a critical value capable of being reached by a strength of an energy signal is set to be -72dBm. When the station needs to perform channel access, the station first monitors the busy/idle state of the channel, and if a strength of an energy signal on the channel is larger than -72dBm, the channel is in the busy state; and if a strength of an energy signal on the channel is smaller than -72dBm, the channel is in the idle state.

Step 102, the STA sends, when it is monitored that the channel is in an idle state, a request to send frame to an access point AP via at least one sub-channel in the channel.

Optionally, when it is monitored that the channel is in the idle state, the STA directly sends a request to send frame (RTS, Request to Send) to the access point AP via at least one sub-channel in the channel.

Or optionally, when it is monitored that the channel is in the idle state, the STA executes a backoff process; and the STA sends the request to send frame to the access point AP through at least one sub-channel in the channel after the backoff process terminates.

Further, before the station sends, when it is monitored that the channel is in the idle state, the request to send frame to the AP via at least one sub-channel in the channel, the station selects at least one sub-channel from the channel for sending the request to send frame.

Optionally, when it is monitored that the channel is in the idle state, the station first selects at least one sub-channel from the channel, and then executes the backoff process on the selected sub-channel. After the backoff process terminates, the STA sends the request to send frame to the AP via the at least one sub-channel in the channel.

Or optionally, when it is monitored that the channel is in the idle state, the STA executes the backoff process with the entire channel as a basis, and after the backoff process terminates, the STA first selects at least one sub-channel from the channel, and then sends the request to send frame to the AP via the selected at least one sub-channel in the channel.

Of course, the station may randomly select at least one sub-channel from the channel for sending the request to send frame, and a method for the selection is not limited hereto.

Exemplarily, it is assumed that there are two stations in a wireless local area network, and the channel is divided into two sub-channels.

Exemplarily, when the STA monitors that a duration in which the channel has been in the idle state reaches a distribution coordination function interframe space (DIFS, DCF Interframe Space) period, the STA may treat the busy/idle state of the entire channel as a reference for starting a backoff timer and select a backoff time 2T to execute the backoff process.

A distribution coordination function (DCF, distribution coordination function) is a distributed media access control mechanism, and its primary responsibility is to control the access to the channel by wireless nodes which share the same wireless channel. In a DCF protocol, before starting to send data, the station needs to monitor whether the channel is in the idle state. If the channel has already been idle, the station still needs to wait a duration of DIFS period and then starts to send data; and if it is monitored that the channel is busy at any moment within the duration of the DIFS period, the station has to postpone the sending of the data.

When the DIFS period elapses and during the DIFS period the channel has been idle, the station starts the backoff process, and the station selects a backoff time according to a backoff algorithm and sets a backoff timer. A generation rule of a random number in a binary random backoff algorithm adopted in IEEE802.11 is that, before sending data, a node first monitors whether the channel is idle, and if the channel is idle, the node may send data after the node monitors that the channel has been idle continuously for an DIFS period; and if the channel is busy, the node generates, after current data transmission terminates, a random backoff time to serve as an initial value of the backoff timer. This backoff time is a random number selected from 0 to a contention window (CW, Contention Window) and uses a time slot as a unit. Thereafter, once the channel is idle for a time slot, the backoff timer subtracts 1. If a station sends data therebetween, timers of the rest stations are frozen, and when the channel is idle for the DIFS period again, the backoff timer is unfrozen and continues to count down until a value of the timer is 0, and the station starts to send data. A size of the contention window starts from CWmin (Contention Window minimum), and whenever one conflict occurs, the contention window increases by times until reaching CWmax (Contention Window maximum). The larger the contention window is, the smaller a possibility of selecting a same random backoff time is, and the larger a capacity of the backoff timer mechanism for solving a collision is. However, the larger the contention window is, the longer a backoff time may be, resulting in unnecessary delay. Therefore, when a data transmission succeeds or retransmission fails continuously for multiple times, the size of the CW is reset to CWmin.

The interframe space DIFS and the backoff time 2T are expressions in the existing protocol IEEE 802.11 standard, where the interframe space DIFS is 34 µs, and T is a minimum unit of the backoff time and is 9 µs.

Exemplarily, it is assumed that there are two stations in the wireless local area network, which are respectively referred to as STA1 and STA2. When the two stations need to perform channel access, the two stations monitor the busy/idle state of the channel. If it is monitored that the channel is in the idle state and a duration in which the channel has been in the idle state reaches a DIFS period, the STA chooses to start a backoff timer according to the channel state, and a backoff time for the STA1 and the STA2 are 2T.

After the backoff time reaches 2T, the STA1 and the STA2 randomly select at least one sub-channel in the channel to send RTS1 frame and RTS2 frame to the AP.

Optionally, the STA1 selects the sub-channel 1 to send the RTS1 frame to the AP, and the STA2 selects the sub-channel 2 to send the RTS2 frame to the AP.

Or optionally, the STA1 selects the sub-channel 2 to send the RTS1 frame to the AP, and the STA2 selects the sub-channel 1 to send the RTS2 frame to the AP.

Or optionally, the STA1 selects the sub-channel 1 to send the RTS1 frame to the AP, and the STA2 selects the sub-channel 1 to send the RTS2 frame to the AP.

Or optionally, the STA1 selects the sub-channel 2 to send the RTS1 frame to the AP, and the STA2 selects the sub-channel 2 to send the RTS2 frame to the AP.

Correspondingly, the AP receives the request to send frame sent by the STA.

Specifically, the AP may be able to correctly receive the request to send frame sent by the STA, or may not be able to correctly receive the request to send frame sent by the STA, namely, when the STA sends the request to send frame via at least one sub-channel in the channel, if there is no request to send frames sent by other stations on the sub-channel selected by the STA, the AP may correctly receive the request to send frame sent by the STA; and if there is a request to send frame sent by other station on the sub-channel where the STA sends the request to send frame, the request to send frames sent by the STA and other stations may collide with each other, resulting in that the AP may not be able to correctly receive the request to send frame sent by the station.

Exemplarily, if the STA1 sends the RTS1 frame to the AP via the sub-channel 1 and the STA2 sends the RTS2 frame to the AP via the sub-channel 2, or if the STA1 sends the RTS1 frame to the AP via the sub-channel 2 and the STA2 sends the RTS2 frame to the AP via the sub-channel 1, since the STA1 and the STA2 respectively send the request to send frames via the sub-channel 1 and the sub-channel 2, and it is known that the sub-channel 1 and the sub-channel 2 are mutually orthogonal according to step S101, the AP may correctly receive the RTS frames sent by the STA1 and the STA2. If the STA1 is closer to the AP, while the STA2 is further from the AP, due to properties of the wireless channel such as channel fading and the like, the AP may correctly receive the RTS1 frame sent by the STA1, and may not be able to correctly receive the RTS2 frame sent by the STA2.

If the STA1 sends the RTS1 frame to the AP via the sub-channel 1 and the STA2 sends the RTS2 frame to the AP via the sub-channel 1, or if the STA1 sends the RTS1 frame to the AP via the sub-channel 2 and the STA2 sends the RTS2 frame to the AP via the sub-channel 2, since both of the STA1 and the STA2 send the RTS 1 frame and the RTS2 frame through the sub-channel 1 or the sub-channel 2, the RTS1 frame and the RTS2 frame may collide with each other, and the AP may not be able to correctly receive the RTS1 frame or the RTS2 frame sent by the STA1 and the STA2. If a transmitting power for sending the RTS1 frame by the STA1 is much larger than a transmitting power for sending the RTS2 frame by the STA2, the AP may correctly receive the RTS1 frame sent by the STA1, and may not be able to correctly receive the RTS2 frame sent by the STA2.

Step 103, if an access response frame fed back by the AP is received, and the access response frame includes identification information and channel resource allocation information of the station, it is determined that channel access succeeds, where the identification information and the channel resource allocation information of the station are used for indicating a channel resource allocated to the station for data transmission by the AP.

Specifically, when the STA receives an access response frame fed back by the AP, and the access response frame includes the identification information of the station and the channel resource allocation information of the station, the channel access succeeds.

The access response frame is fed back from the AP to the STA through the channel or the sub-channel selected by the STA.

The access response frame includes the identification information and the channel resource allocation information of the station, and does not include identification information and the channel resource allocation information of other stations succeeding in channel access; or the access response frame includes the identification information and the channel resource allocation information of the station, and also includes identification information and channel resource allocation information of other stations succeeding in channel access.

Preferably, the access response frame replied by the AP includes identification information and channel resource information of the station and includes the identification information and channel resource information of other stations succeeding in channel access, and the access response frame may be fed back to the station via the channel.

Optionally, the access response frame replied by the AP includes identification information and channel resource information of the station, and does not include identification information or channel resource information of other stations succeeding in channel access, and the access response frame may be fed back to the station via the channel.

Or optionally, the access response frame replied by the AP includes identification information and channel resource information of the station and includes identification information and channel resource information of other stations succeeding in channel access, and the access response frame may be fed back to the station via the sub-channel selected by the station.

Or optionally, the access response frame replied by the AP includes identification information and channel resource information of the station, and does not include identification information and channel resource information of other stations succeeding in channel access, and the access response frame may be fed back to the station via the sub-channel selected by the station.

Exemplarily, if the AP correctly receives the RTS1 frame sent by the STA1 and the RTS2 frame sent by the STA2, the AP needs to reply an access response frame to the STA1 and the STA2 so as to indicate that the channel access of the STA1 and the STA2 succeeds.

The access response frame replied by the AP includes information about channel resources randomly allocated to the STA1 and the STA2 by the AP. Specifically, the AP may allocate the sub-channel 1 to the STA1 and allocate the sub-channel 2 to the STA2; or may allocate the sub-channel 2 to the STA1 and allocate the sub-channel 1 to the STA2; or may allocate the entire channel to the STA1 and allocate the entire channel to the STA2.

Preferably, the AP may reply a group clear to send (G-CTS, Group Clear to Send) frame and feed back the frame to the STA1 and the STA2 via the entire channel, where the G-CTS frame includes identification information of the STA1 and the STA2, and includes information about sub-channels randomly allocated to the STA1 and the STA2 by the AP.

Optionally, the AP may reply clear to send (CTS, Clear to Send) frames to the STA1 and the STA2 respectively via the entire channel, namely the AP may reply CTS1 frame to the STA1 via the entire channel and reply CTS2 frame to the STA2 via the entire channel after waiting a short interframe space (SIFS, Short Interframe space) period. The CTS1 frame only includes identification information of a corresponding station STA1 and information about a channel resource allocated to the STA1 by the AP, and the CTS2 frame only includes identification information of a corresponding station STA2 and information about a channel resource allocated to the STA2 by the AP.

Or optionally, the AP may reply G-CTS frames to the STA1 and the STA2 via the sub-channels. That is, the AP replies a G-CTS frame to the STA1 via the sub-channel 1 selected by the STA1 and replies a G-CTS frame to the STA2 via the sub-channel 2 selected by the STA2.

Or optionally, the AP may reply the CTS1 frame and the CTS2 frame to the STA1 and the STA2 through the sub-channels. That is, the AP replies the CTS1 frame to the STA1 through the sub-channel 1 selected by the STA1 and replies the CTS2 frame to the STA2 through the sub-channel 2 selected by the STA2.

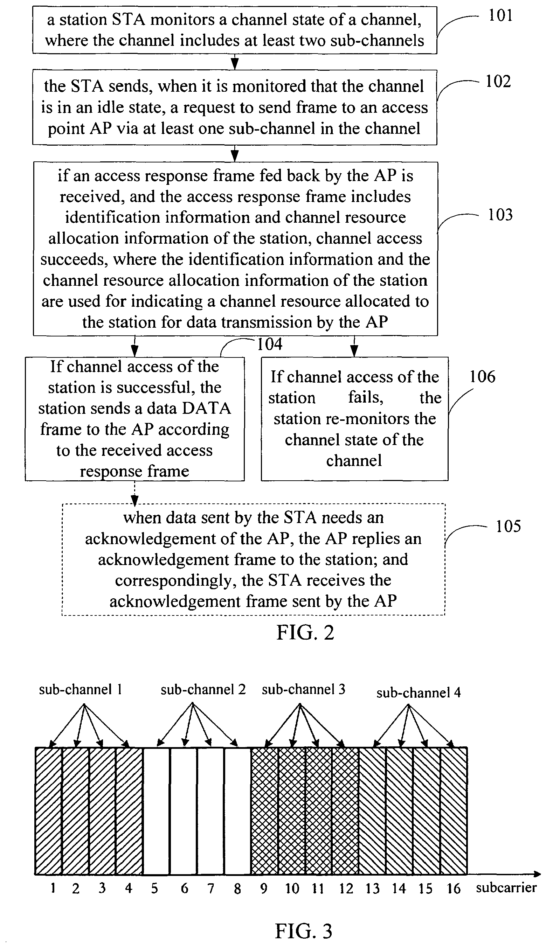

It can be seen from steps 101 to 103 that the channel access of the station succeeds, when the station succeeds in the channel access and has data to be transmitted, as shown in FIG. 2, step 104 is further executed.

Step 104, the station sends a data DATA frame to the AP according to the received access response frame.

The sending, by the station, a data DATA frame to the access point according to the received access response frame, includes:
determining, by the station, channel resource allocation information of the station according to the identification information contained in the received access response frame; and
if the channel resource allocation information includes indication information of using the channel for transmission, sending, by the station, the DATA frame to the access point on the channel, or
if the channel resource allocation information includes indication information of transmitting by using at least one sub-channel, sending, by the station, the DATA frame on the at least one sub-channel.

Exemplarily, after the steps 101 to 103, if the STA1 and the STA2 succeed in the channel access and need to send data, the STA1 and the STA2 send data frames to the AP according to the channel resource allocation information contained in the G-CTS frame(s) sent by the AP, where the AP allocates the sub-channel 1 to the STA1 and allocates the sub-channel 2 to the STA2, then after the STA1 and the STA2 wait an SIFS period during which the channel is idle, the STA1 sends DATA1 frame to the AP on the sub-channel 1, and the STA2 sends DATA2 frame to the AP on the sub-channel 2.

Also exemplarily, after the steps 101 to 103, if the STA1 and the STA2 succeed in the channel access and need to send data, the STA1 and the STA2 send data frames to the AP according to the channel resource allocation information contained in the G-CTS frame(s) sent by the AP, where the AP allocates the entire channel to the STA1 and allocates the entire channel to the STA2, then the STA1 sends DATA1 frame to the AP on the entire channel after waiting for an SIFS period during which the channel is idle, and the STA2 sends DATA2 frame to the AP on the entire channel after further waiting for an SIFS period during which the channel is idle.

Further, in a case that the data sent by the STA does not need an acknowledgement of the AP, the method finishes as long as step 104 is completed; and in a case that the data sent by the STA needs an acknowledgement of the AP, step 105 is further executed after step 104 is executed.

Step 105, in a case that data sent by the STA needs an acknowledgement of the AP, the AP replies an acknowledgement frame to the station; and correspondingly, the STA receives the acknowledgement frame sent by the AP via the channel or the sub-channel selected by the STA, where the acknowledgement frame includes the identification information of the station, or the acknowledgement frame includes the identification information of the station and the identification information of other stations.

Preferably, the AP may send a group acknowledgement (G-ACK, Group Acknowledgement) frame for STAs which send data successfully through the entire channel to the station, where the G-ACK frame is formed by the AP by aggregating acknowledgement messages of a plurality of STAs which send data successfully, that is, the G-ACK frame includes the identification information of the station and the identification information of other stations.

Optionally, the AP may reply ACK (Acknowledgement) frames one by one to STAs which send data successfully through the sub-channels selected by the STAs.

Or optionally, the AP may reply ACK frames to STAs which send data successfully one by one through the entire channel.

Or optionally, the AP may reply a G-ACK frame to the STA which sends data successfully through the sub-channel selected by the STA.

Exemplarily, after step 104, if the AP receives the DATA1 frame sent by the STA1 on the sub-channel 1 and the DATA2 frame sent by the STA2 on the sub-channel 2, and if the AP needs to acknowledge the received data, the AP may acknowledge the received data in different manners.

Preferably, the AP receives the DATA frames sent by the STAs and may reply a G-ACK frame to the STA1 and the STA2 through the entire channel after waiting for an SIFS period, where the G-ACK frame includes acknowledgement identification information of the STA1 and the STA2.

Optionally, the AP receives the DATA frames sent by the STAs, and after waiting for an SIFS period, the AP may reply the ACK1 frame to the STA1 through the sub-channel 1 selected by the STA1 and reply the ACK2 frame to the STA2 through the sub-channel 2 selected by the STA2, where ACK1 only includes acknowledgement identification information of the STA1 and ACK2 only includes acknowledgement identification information of the STA2.

Or optionally, the AP receives the DATA frames sent by the STAs, and may reply the ACK1 frame to the STA1 and the ACK2 frame to the STA2 one by one through the entire channel. That is, the AP sends the ACK1 frame to the STA1 through the entire channel after waiting for an SIFS period, and sends the ACK2 frame to the STA2 through the entire channel after further waiting for an SIFS period.

Or optionally, the AP receives the DATA frames sent by the STAs and may reply a G-ACK frame to the STA1 through the sub-channel 1 selected by the STA1 and reply a G-ACK frame to the STA2 through the sub-channel 2 selected by the STA2.

If the channel access fails, step 106 is executed.

Step 106, in a case that the channel access fails, the station re-monitors the channel state of the channel.

Access Failure of the station includes: if the station receives the access response frame fed back by the AP and the access response frame does not include the identification information and the channel resource allocation information of the station, or if the station does not receive the access response frame fed back by the AP, the channel access fails.

The embodiment of the present invention provides a channel access method, apparatus and system, in which an STA monitors the busy/idle state of the channel, so as to send the request to send frame to the AP via at least one sub-channel in the channel when the channel is in the idle state, the AP replies the access response frame to all or a part of STAs according to the received request to send frames, and an STA learns whether the channel access succeeds according to the received access response frame. Further, in the case that channel access succeeds, an STA sends the DATA frame on a sub-channel or the channel according to the channel resource allocation information contained in the access response frame. Through such a channel access method, STAs only need to monitor the busy/idle state of the entire channel, thereby simplifying the monitoring process of the STAs, and moreover, only when the entire channel is in the idle state, the STAs may simultaneously select at least one sub-channel to send the request to send frames to the AP, which satisfies time synchronization in channel access, and further enables the AP to uniformly process the received request to send frames, so as to avoid signals at adjacent frequency bands interfere with each other.

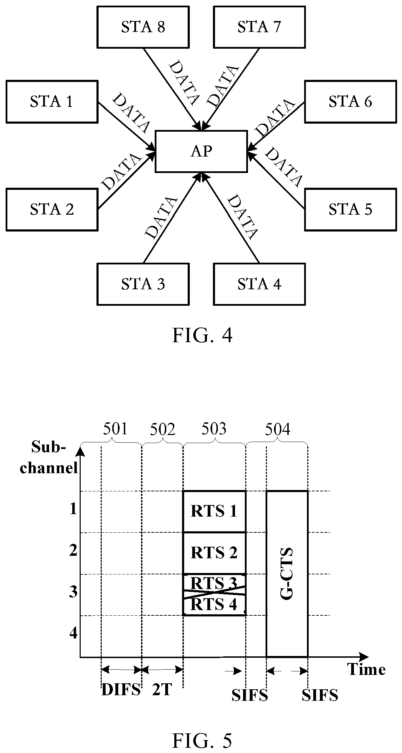

The present invention further provides specific embodiments below for describing the above-mentioned method for channel access and data transmission in detail. With an OFDMA system as an example, as shown in FIG. 3, it is assumed that there are 16 available subcarriers in total in the channel, which are numbered from 1 to 16; and the 16 subcarriers are divided into four sub-channels, where subcarrier 1 to subcarrier 4 form sub-channel 1, subcarrier 5 to subcarrier 8 form sub-channel 2, subcarrier 9 to subcarrier 12 form sub-channel 3, and subcarrier 13 to subcarrier 16 form sub-channel 4. Meanwhile, there are 8 STAs which need to send DATA frames to one AP, and as shown in FIG. 4, the 8 STAs are respectively marked as STA1, STA2, STA3, STA4, STA5, STA6, STA7 and STA8. The 8 STAs in FIG. 4 need to perform channel access and data transmission through the channel as shown in FIG. 3.

Before sending a DATA frame to the AP, the STA first needs to perform channel access process, and based on the scenario described above, a specific embodiment regarding the channel access method is provided below, as shown in FIG. 5.

### Embodiment 1

Step 501, 8 STAs monitor a busy/idle state of the channel. If a duration in which the channel has been in the idle state reaches a DIFS period, go to step 502, and otherwise, stay at step 501.

Specifically, the channel is divided into four sub-channels, and the four sub-channels are mutually orthogonal. When a strength of an energy signal in the channel is larger than or equal to a preset threshold, it is determined that the channel is in the busy state; and when the strength of an energy signal in the channel is smaller than the preset threshold, it is determined that the channel is in the idle state.

Step 502, it is assumed that backoff times selected by the STA1, the STA2, the STA3 and the STA4 are all 2T, and backoff times selected by the STA5, the STA6, the STA7 and the STA8 are all larger than 2T, then a backoff process is executed.

Step 503, after a 2T period, the STAs selecting the backoff time to be 2T randomly select a sub-channel to send an RTS frame to the AP, and then go to step 504; and the STAs selecting the backoff time larger than 2T go to step 501.

Specifically, RTS frames sent by the STA1, the STA2, the STA3 and the STA4 are respectively marked as RTS1 frame, RTS2 frame, RTS3 frame and RTS4 frame. As shown in FIG. 5, the STA1 randomly selects the sub-channel 1 to send the RTS1 frame to the AP, the STA2 randomly selects the sub-channel 2 to send the RTS2 frame to the AP, the STA3 randomly selects the sub-channel 3 to send the RTS3 frame to the AP, and the STA4 randomly selects the sub-channel 3 to send the RTS4 frame to the AP.

Step 504, the AP correctly receives the RTS1 frame and the RTS2 frame sent by the STA1 and the STA2. After waiting for an SIFS period, the AP sends a G-CTS frame via the channel, where the G-CTS frame includes allocation information of channel sources; and correspondingly, the STA1, the STA2, the STA3 and the STA4 receive the G-CTS frame sent by the AP.

Specifically, the STA1 and the STA2 send the RTS1 frame and the RTS2 frame via the sub-channel 1 and the sub-channel 2, respectively, that is, only one STA sends an RTS frame on each of the sub-channel 1 and the sub-channel 2, and there is no other STA sending an RTS frame, so no collision is generated, and the AP is able to correctly receive the RTS1 frame and the RTS2 frame sent by the STA1 and the STA2.

Since the STA3 and the STA4 select a same sub-channel 3 to send the RTS3 frame and the RTS4 frame, the RTS3 frame and the RTS4 frame collide with each other, resulting in that the AP is unable to correctly receive the RTS3 frame and the RTS4 frame.

Further, after waiting for an SIFS period, the AP sends a G-CTS frame through the entire channel according to the received RTS frames, and correspondingly, the STA1, the STA2, the STA3 and the STA4 receive the G-CTS frame sent by the AP, as shown in FIG. 5. The G-CTS frame includes information about channel sources allocated to the STA1 and the STA2 by the AP, and does not include information about channel sources allocated to the STA3 and the STA4 by the AP, the AP randomly allocates the sub-channel 1 and the sub-channel 2 to the STA1 and randomly allocates the sub-channel 3 and the sub-channel 4 to the STA2, and the AP does not need to allocate sub-channels to the STA3 and the STA4. Therefore, according to the information contained in the G-CTS frame, the stations know that channel accesses of the STA1 and the STA2 are successful and channel accesses of the STA3 and the STA4 fail.

The embodiment of the present invention provides a channel access method, in which the STAs monitor the busy/idle state of the channel, so as to send the request to send frames to the AP via one sub-channel in the channel when the channel is in the idle state, the AP replies the access response frame to all or a part of STAs according to the received request to send frames, and the STAs learns whether the channel access succeeds according to the received access response frame. Through such a channel access method, the STAs only need to monitor the busy/idle state of the entire channel, thereby simplifying the monitoring process of the STAs, and moreover, only when the entire channel is in the idle state, the STAs can simultaneously select at least one sub-channel to send the request to send frames to the AP, which satisfies time synchronization in channel access, and further enables the AP to uniformly process the received request to send frames, so as to avoid signals at adjacent frequency bands interfere with each other.

It can be seen from embodiment 1 that, the STA1 and the STA2 succeed in channel access, then when the STA1 and the STA2 need to perform data transmission, the STA1 and the STA2 send DATA frames to the AP according to the received access response frames. Two specific embodiments are provided for different channel resources that are contained in the access response frames and allocated by the AP to the STA1 and the STA2 for data transmission.

### Embodiment 2

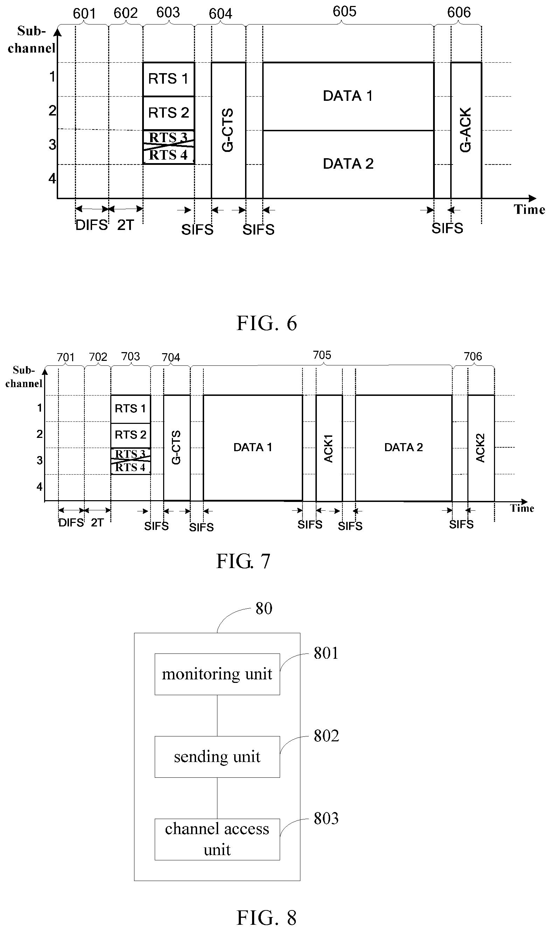

The present embodiment provides a method for data transmission in the case that channel access succeeds, including steps 501 to 504 in embodiment 1, which are steps 601-604 in the present embodiment and will not be repeated redundantly herein. As shown in FIG. 6, the present embodiment further includes the following steps.

Step 605, after the STA1 and the STA2 wait, according to the received G-CTS frame, for an SIFS period during which the channel is idle, the STA1 sends DATA1 frame to the AP on the sub-channel 1 and the sub-channel 2, and the STA2 sends DATA2 frame to the AP on the sub-channel 3 and the sub-channel 4. Correspondingly, the AP receives the DATA1 frame sent by the STA1 and the DATA2 frame sent by the STA2.

Specifically, the STA1, the STA2, the STA3 and the STA4 receive the G-CTS frame sent by the AP via the channel. Since the G-CTS frame only includes channel resource allocation information of the STA1 and the STA2, and does not include the channel resource allocation information of the STA3 and the STA4, after the STA1 and the STA2 wait the SIFS period during which the channel is idle, the STA1 sends the DATA1 frame to the AP on the sub-channel 1 and the sub-channel 2, and the STA2 sends DATA2 frame to the AP on the sub-channel 3 and the sub-channel 4, as shown in FIG. 6.

If data (for example, a broadcast frame, a multicast frame) sent by the STA1 and the STA2 does not need an acknowledgement of the AP, the AP only needs to receive the data sent by the STAs, namely, the method finishes as long as step 605 is completed.

If the data sent by the STA1 and the STA2 needs an acknowledgement of the AP, step 606 is executed.

Step 606, the AP replies a G-ACK frame via the entire channel after waiting for an SIFS period.

As shown in FIG. 6, the AP receives the DATA1 frame and the DATA2 frame sent by the STA1 and the STA2, and replies the G-ACK frame to the STA1 and the STA2 through the entire channel after waiting for the SIFS period, where the AP aggregates acknowledgement information of the STA1 and the STA2 in the G-ACK frame.

The embodiment of the present invention provides a channel access method, in which the STAs monitor the busy/idle state of the channel, so as to send the request to send frames to the AP via one sub-channel in the channel when the channel is in the idle state, and the AP replies the access response frame to all or a part of STAs according to the received request to send frames; further, the STAs receive the access response frame sent by the AP and send the DATA frames on the allocated sub-channel according to the channel source allocation information contained in the access response frame sent by the AP. Through such a channel access method, the STAs only need to monitor the busy/idle state of the entire channel, thereby simplifying the monitoring process of the STAs, and moreover, only when the entire channel is in the idle state, the STAs can simultaneously select one sub-channel in the channel to send the request to send frames to the AP, which satisfies time synchronization in channel access, and further enables the AP to uniformly process the received request to send frames, so as to avoid signals at adjacent frequency bands interfere with each other.

### Embodiment 3

The present invention further provides another specific embodiment below for describing a method for data transmission in the case that channel access succeeds in detail.

In the present embodiment, the method includes steps 501 to 504 in embodiment 1, which are steps 701-704 in the present embodiment and will not be repeated redundantly herein. As shown in FIG. 7, the present embodiment further includes the following steps.

Step 705, according to the received G-CTS frame, the STA1 waits for an SIFS period during which the channel is idle and then sends DATA1 frame to the AP on the entire channel, and the STA2 waits for an SIFS period during which the channel is idle and then sends DATA2 frame to the AP on the entire channel. Correspondingly, the AP receives the DATA1 frame sent by the STA1 and the DATA2 frame sent by the STA2, as shown in FIG. 7.

If data (for example, a broadcast frame, a multicast frame) sent by the STA1 and the STA2 does not need an acknowledgement of the AP, the AP only needs to receive the data sent by the STAs, namely, the method finishes as long as step 705 is completed.

If the data sent by the STA1 and the STA2 needs an acknowledgement of the AP, step 706 is executed.

Step 706, after receiving the DATA1 frame sent by the STA1 and waiting for an SIFS period, the AP replies an ACK1 frame via the entire channel; and after receiving the DATA2 frame sent by the STA2 and waiting for an SIFS period, the AP replies an ACK2 frame through the entire channel, as shown in FIG. 7.

The embodiment of the present invention provides a channel access method, in which the STAs monitor the busy/idle state of the channel, so as to send the request to send frames to the AP via one sub-channel in the channel when the channel is in the idle state, and the AP replies the access response frame to all or a part of STAs according to the received request to send frames; further, in the case that channel access of an STA succeeds, the STA sends the DATA frame on the channel according to the channel source allocation information contained in the access response frame. Through such a channel access method, the STAs only need to monitor the busy/idle state of the entire channel, thereby simplifying the monitoring process of the STAs, and moreover, only when the entire channel is in the idle state, the STAs can simultaneously select one sub-channel in the channel to send the request to send frames to the AP, which satisfies time synchronization in channel access, and further enables the AP to uniformly process the received request to send frames, so as to avoid signals at adjacent frequency bands interfere with each other.

The embodiment of the present invention provides a station. Respective functional modules in the station correspond to the steps in the above-mentioned method with the station as an executive body, and will not be described here in detail. As shown in FIG. 8, the station 80 includes:
a monitoring unit 801, configured to monitor a channel state of a channel, where the channel includes at least two sub-channels;
a sending unit 802, configured to send, when the monitoring unit 801 monitors that the channel is in an idle state, a request to send frame to an access point AP via at least one sub-channel in the channel; and
a channel access unit 803 configured to, if an access response frame fed back by the AP is received, and the access response frame includes identification information and channel resource allocation information of the station, determine that channel access succeeds.

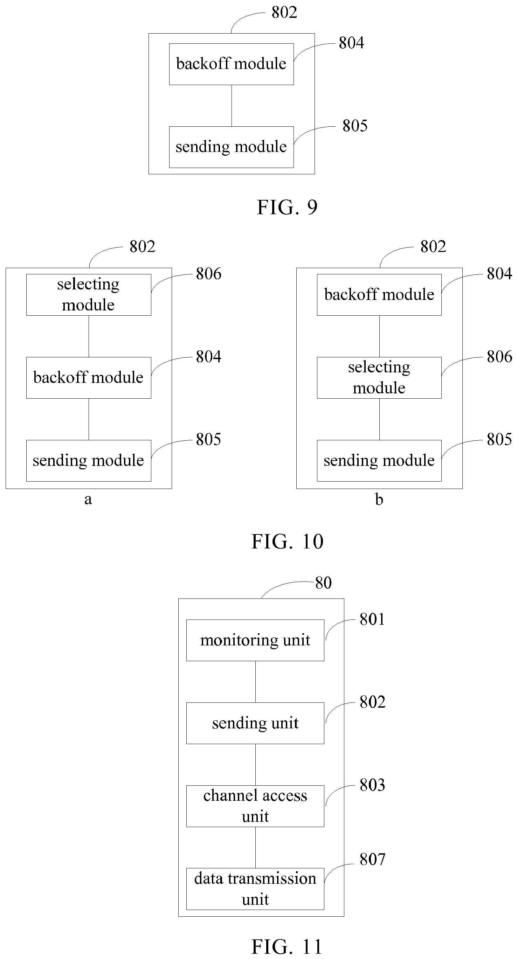

Further, the sending unit 802 includes: a backoff module 804 and a sending module 805, as shown in FIG. 9.

The backoff module 804 is configured to execute a backoff process when the monitoring unit 801 monitors that the channel is in the idle state.

The sending module 805 is configured to send the request to send frame to the AP via at least one sub-channel in the channel after the backoff module 804 executes the backoff process.

Further, the sending unit 802 further includes a selecting module 806, where the selecting module 806 is configured to select at least one sub-channel from the channel for sending the request to send frame.

Optionally, the selecting module 806 may be located in front of the backoff module 804, as shown in FIG. 10(a).

Or optionally, the selecting module 806 may also be located behind the backoff module 804, as shown in FIG. 10(b).

If the STA succeeds in channel access and needs to send data, the station 80 further includes a data transmission unit 807, as shown in FIG. 11. The data transmission unit 807 is configured to send, in the case that channel access of the channel access unit 803 succeeds, a data DATA frame to the access point AP according to the access response frame received by the channel access unit 803.

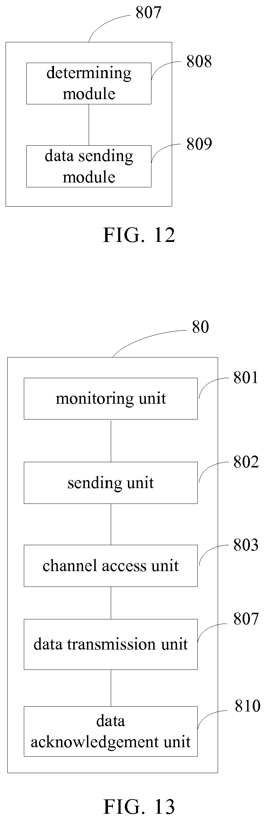

Further, the data transmission unit 807 includes a determining module 808 and a data sending module 809, as shown in FIG. 12.

The determining module 808 is configured to determine the channel resource allocation information of the station according to the identification information contained in the access response frame received by the channel access unit 803.

The data sending module 809 is configured to send, in a case that the channel resource allocation information determined by the determining module 808 includes indication information of performing data transmission by using the channel, the DATA frame to the access point on the channel; or send, in a case that the channel resource allocation information determined by the determining module 808 includes indication information of performing data transmission by using at least one sub-channel, the DATA frame on the at least one sub-channel.

Optionally, if the data sent by the STA requires the AP to reply an acknowledgement frame, the station 80 further includes a data acknowledgement unit 810, as shown in FIG. 13.

The data acknowledgement unit 810 is configured to receive an acknowledgement frame sent by the AP through the channel or the sub-channel selected by the STA, where the acknowledgement frame includes the identification information of the station, or the acknowledgement frame includes the identification information of the station and identification information of other stations.

Further, the channel access unit 803 is further configured to, if an access response frame fed back by the AP is received and the access response frame does not include the identification information and the channel resource allocation information of the station, or if an access response frame fed back by the AP is not received, determine that the channel access fails.

The monitoring unit 801 is further configured to re-monitor the channel state of the channel in a case that the channel access fails.

The present invention further provides a channel access system, including an access point and the above-mentioned at least two stations;
where, the access point is configured to receive a request to send frame sent by the station, generates an access response frame according to the received request to send frame and feeds back the access response frame to the station; and if the station succeeds in channel access and needs to send data, the access point is configured to receive a data frame sent by the station and determine whether an acknowledgement frame needs to be replied according to a type of data sent by the station.

The embodiments of the present invention provide a channel access apparatus and system, in which an STA monitors the channel state of the channel, so as to send, when the channel is in the idle state, the request to send frame to the AP through at least one sub-channel in the channel; the AP replies the access response frame to all or a part of STAs according to the received request to send frames, and an STA learns whether channel access succeeds according to the received access response frame. Further, in the case that channel access succeeds, an STA sends the DATA frame on the sub-channel or the channel according to the channel resource allocation information contained in the access response frame. Through such a channel access method, an STA only needs to monitor the busy/idle state of the entire channel, thereby simplifying the monitoring process of the STA, and moreover, only when the entire channel is in the idle state, STAs may simultaneously select at least one sub-channel to send the request to send frames to the AP, which satisfies time synchronization in channel access, and further enables the AP to uniformly process the received request to send frames, so as to avoid signals at adjacent frequency bands interfere with each other.

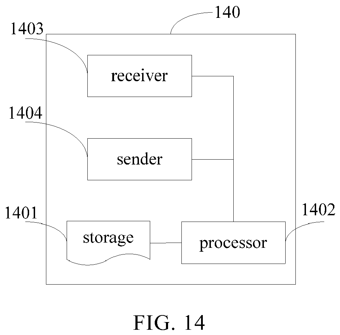

The embodiment of the present invention provides a station 140, including: a storage 1401, a processor 1402, a sender 1403 and a receiver 1404, as shown in FIG. 14.

The storage 1401 may be a memory, and a group of program codes is stored in the storage 1401, where the program codes are used for implementing a channel access method with the station 140 as an executive body.

The processor 1402 is configured to call the program codes stored in the storage 1401, so as to monitor a channel state of a channel.

The sender 1403 is configured to send, when the processor 1402 monitors that the channel is in an idle state, a request to send frame to an access point AP via at least one sub-channel in the channel.

The receiver 1404 is configured to receive an access response frame fed back by the AP, where if the access response frame includes identification information and channel resource allocation information of the station, it is determined that channel access succeeds, where the identification information and the channel resource allocation information of the station are used for indicating a channel resource allocated to the station for data transmission by the AP.

Further, the processor 1402 is further configured to call the program codes stored in the storage 1401, so as to execute a backoff process when it is monitored that the channel is in the idle state, and send the request to send frame to the AP via at least one sub-channel in the channel after the backoff process terminates.

Further, the processor 1402 is further configured to call the program codes stored in the storage 1401 to select at least one sub-channel from the channel for sending the request to send frame.

Further, the sender 1403 is further configured to send a data DATA frame to the AP according to the received access response frame.

Further, the processor 1402 is further configured to call the program codes stored in the storage 1401, so as to determine the channel resource allocation information of the station according to the identification information contained in the access response frame received by the receiver 1404, where, if the channel resource allocation information includes indication information of using the channel to transmit data, the station sends the DATA frame to the access point on the channel; or, if the channel resource allocation information includes indication information of using at least one sub-channel to transmit data, the station sends the DATA frame on the at least one sub-channel.

Further, the receiver 1404 is further configured to receive an acknowledgement frame sent by the AP through the channel or the sub-channel selected by the STA, where the acknowledgement frame includes the identification information of the station, or the acknowledgement frame includes the identification information of the station and identification information of other stations.

Further, the receiver 1404 is further configured to receive an access response frame fed back by the AP, where if the access response frame does not include the identification information or the channel resource allocation information of the station, or if the access response frame fed back by the AP is not received, it is determined that the channel access fails.

In the case that the channel access fails, the processor 1402 is further configured to call the program codes stored in the storage 1401 to re-monitor the channel state of the channel.

In several embodiments provided in the present application, it should be understood that, the disclosed system, apparatus and method may be implemented in other manners. For example, the apparatus embodiments described above are merely exemplary, e.g., the division of the units is merely a logic function division, other division manners may exist in practical implementation, for example, a plurality of units or components may be combined or integrated to another system, or some features may be omitted or not implemented. In addtion, the displayed or discussed mutual coupling or direct coupling or communication connection may be indirect coupling or communication connection of apparatuses or units via some interfaces, apparatuses or units, and may be in electrical, mechanical or other forms.

The units described as separate components may be or may not be separated physically, components displayed as units may be physical units or not, namely, may be located in one place, or may be distributed on a plurality of network units. A part of or all of the units may be selected to implement the purposes of the solutions in the embodiments according to actual demand.

In addition, the respective functional units in the respective embodiments of the present invention may be integrated in a processing unit, or the units may singly exist physically, or two or more units may be integrated in one unit. The above-mentioned integrated unit may be implemented in a form of hardware or may be implemented in a form of hardware plus a software functional unit.

The above-mentioned integrated unit implemented in the form of the software functional unit may be stored in a computer readable storage medium. The above-mentioned software functional unit is stored in a storage medium, and includes a plurality of instructions enabling a computer device (may be a personnel computer, a server, or a network device or the like) to execute part of the steps of the methods in the embodiments of the present invention. The foregoing storage medium includes a variety of media capable of storing program codes, such as a USB disk, a mobile hard disk, a read-only memory (Read-Only Memory, referred to as ROM), a random access memory (Random Access Memory, referred to as RAM), a magnetic disk, an optical disk or the like.

Finally, it should be noted that the above-mentioned embodiments are merely used for illustrating the technical solutions of the present invention, rather than limiting the invention to the embodiments.

## Claims

1. A channel access method performed by a station, STA, the method comprising:
• monitoring (step 101) a channel state of an entire channel comprising at least two sub-channels without monitoring a channel state of any sub-channel of the at least two sub-channels,
• sending (step 102), when it is monitored that the entire channel is in an idle state, a request to send frame to an access point, AP, via at least one sub-channel in the entire channel, and
• if an access response frame fed back by the AP is received and the access response frame comprises identification information and channel resource allocation information of the STA, determining (step 103) that channel access succeeds,
wherein the identification information and the channel resource allocation information of the STA are used for indicating a channel resource allocated to the STA for data transmission by the AP.

2. The method of claim 1, wherein the step of sending (step 102), when it is monitored that the entire channel is in the idle state, the request to send frame to the access point, AP, via at least one sub-channel in the channel, comprises:
executing a backoff process when it is monitored that the entire channel is in the idle state; and
sending the request to send frame to the AP via at least one sub-channel in the channel after the backoff process terminates.

3. The method of any of claims 1 to 2, wherein before the step of sending (step 102), when it is monitored that the entire channel is in the idle state, the request to send frame to the access point AP via at least one sub-channel in the entire channel, the method further comprises:
selecting at least one sub-channel for sending the request to send frame from the channel.

4. The method of claim 3, wherein
the access response frame is fed back from the AP to the STA via the entire channel or the sub-channel selected by the STA.

5. The method of any of claims 1 to 4, further comprising:
sending a data, DATA, frame to the AP according to the received access response frame.

6. The method of claim 5, wherein the step of sending the DATA frame to the AP according to the received access response frame, comprises:
determining the channel resource allocation information of the STA according to the identification information contained in the received access response frame; and
if the channel resource allocation information comprises indication information of performing data transmission by using the entire channel, sending the DATA frame to the access point on the entire channel, or,
if the channel resource allocation information comprises indication information of performing data transmission by using at least one sub-channel, sending the DATA frame on the at least one sub-channel.

7. The method of any of claims 5 to 6, wherein in a case that the DATA frame needs an acknowledgement of the AP, the method further comprises:
receiving an acknowledgement frame sent by the AP via the entire channel or the sub-channel selected by the STA, wherein the acknowledgement frame comprises the identification information of the station, or the acknowledgement frame comprises the identification information of the station and identification information of other stations.

8. The method of any of claims 1 to 4, further comprising:
if the STA receives an access response frame fed back by the AP and the access response frame does not comprise the identification information and the channel resource allocation information of the station, or, if the station does not receive an access response frame fed back by the AP, determining that the channel access fails; and
wherein when the channel access fails, the method further comprises:
re-monitoring the channel state of the entire channel.

9. A station, STA, configured to perform any of the methods according to claims 1-8.

10. A channel access system, comprising an access point and at least two stations according to claim 9.

## Patentansprüche

1. Kanalzugangsverfahren, das von einer Station, STA, ausgeführt wird, wobei das Verfahren umfasst:
- Beobachten (Schritt 101) eines Kanalzustands eines gesamten Kanals, der mindestens zwei Teilkanäle umfasst, ohne einen Kanalzustand eines Teilkanals der mindestens zwei Teilkanäle zu beobachten,
- Senden (Schritt 102), wenn beobachtet wird, dass sich der gesamte Kanal in einem Ruhezustand befindet, einer Anforderung zum Senden eines Frames über mindestens einen Teilkanal in dem gesamten Kanal an einen Zugangspunkt (Access Point, AP), und
- wenn eine Rückmeldung eines Zugangsantwortframes von dem AP empfangen wird und der Zugangsantwortframe Identifizierungsinformationen und Zuteilungsinformationen für die Kanalressourcen der STA umfasst, Ermitteln (Schritt 103), dass der Kanalzugang erfolgreich ist,
wobei die Identifizierungsinformationen und die Zuteilungsinformationen für die Kanalressourcen der STA verwendet werden, um eine Kanalressource anzuzeigen, die der STA durch den AP für eine Datenübertragung zugeteilt wurde.

2. Verfahren nach Anspruch 1, wobei der Schritt des Sendens (Schritt 102), wenn beobachtet wird, dass sich der gesamte Kanal in dem Ruhezustand befindet, der Anforderung zum Senden eines Frames über mindestens einen Teilkanal in dem Kanal an einen Zugangspunkt (Access Point, AP), umfasst:
Ausführen eines Backoff-Prozesses, wenn beobachtet wird, dass sich der gesamte Kanal im Ruhezustand befindet; und
Senden der Anforderung zum Senden eines Frames an den AP über mindestens einen Teilkanal in dem Kanal, nachdem der Backoff-Prozess abgeschlossen wurde.

3. Verfahren nach einem der Ansprüche 1 bis 2, wobei das Verfahren vor dem Schritt des Sendens (Schritt 102), wenn beobachtet wird, dass sich der gesamte Kanal in dem Ruhezustand befindet, der Anforderung zum Senden eines Frames über mindestens einen Teilkanal in dem gesamten Kanal an einen Zugangspunkt (Access Point, AP), außerdem umfasst:
Auswählen mindestens eines Teilkanals des Kanals zum Senden der Anforderung des Frames.

4. Verfahren nach Anspruch 3, wobei
der Zugangsantwortframe von dem AP über den gesamten Kanal oder über den von der STA ausgewählten Teilkanal an die STA zurückgemeldet wird.

5. Verfahren nach einem der Ansprüche 1 bis 4, das außerdem umfasst:
Senden eines Datenframes, DATA-Frame gemäß dem empfangenen Zugangsantwortframe an den AP.

6. Verfahren nach Anspruch 5, wobei der Schritt des Sendens des DATA-Frames gemäß dem empfangenen Zugangsantwortframe an den AP umfasst:
Ermitteln der Zuteilungsinformationen für die Kanalressource des STA gemäß den Identifizierungsinformationen, die in dem empfangenen Zugangsantwortframe enthalten sind; und
wenn die Zuteilungsinformationen für die Kanalressource Anzeigeinformationen zum Ausführen einer Datenübertragung umfassen, indem der gesamte Kanal verwendet wird, Senden des DATA-Frames auf dem gesamten Kanal an den Zugangspunkt, oder wenn die Zuteilungsinformationen für die Kanalressource Anzeigeinformationen zum Ausführen einer Datenübertragung umfassen, indem mindestens ein Teilkanal verwendet wird, Senden des DATA-Frames auf dem mindestens einen Teilkanal.

7. Verfahren nach einem der Ansprüche 5 bis 6, wobei das Verfahren, in einem Fall, in dem der DATA-Frame eine Bestätigung des AP erfordert, außerdem umfasst:
Empfangen eines Bestätigungsframes, der von dem AP über den gesamten Kanal oder über den von der STA ausgewählten Teilkanal gesendet wird, wobei der Bestätigungsframe die Identifizierungsinformationen der Station umfasst oder wobei der Bestätigungsframe die Identifizierungsinformationen der Station und Identifizierungsinformationen von anderen Stationen umfasst.

8. Verfahren nach einem der Ansprüche 1 bis 4, das außerdem umfasst:
wenn die STA einen Zugangsantwortframe empfängt, der von dem AP zurückgemeldet wurde, und der Zugangsantwortframe weder die Identifizierungsinformationen noch die Zuteilungsinformationen für die Kanalressource der Station umfasst, oder wenn die Station keinen Zugangsantwortframe empfängt, der von dem AP zurückgemeldet wurde, Ermitteln, das der Kanalzugang fehlgeschlagen ist; und
wobei das Verfahren, wenn der Kanalzugang fehlschlägt, außerdem umfasst:
erneutes Beobachten des Kanalzustands des gesamten Kanals.

9. Station, STA, die konfiguriert ist zum Ausführen eines der Verfahren nach einem der Ansprüche 1 bis 8.

10. Kanalzugangssystem, das einen Zugangspunkt und mindestens zwei Stationen nach Anspruch 9 umfasst.

## Revendications

1. Procédé d'accès à un canal exécuté par une station, STA, le procédé comprenant les étapes suivantes :
• contrôler (étape 101) un état de canal d'un canal entier comportant au moins deux sous-canaux sans contrôler un état de canal d'un sous-canal quelconque des au moins deux sous-canaux,
• envoyer (étape 102), lorsqu'il est contrôlé que le canal entier est dans un état inactif, une requête demandant d'envoyer une trame à un point d'accès, AP, par le biais d'au moins un sous-canal dans le canal entier, et
• si une trame de réponse d'accès retournée par l'AP est reçue et que la trame de réponse d'accès comporte des informations d'identification et des informations d'attribution de ressources de canal du STA, déterminer (étape 103) qu'un accès au canal a réussi,
les informations d'identification et les informations d'attribution de ressources de canal du STA étant utilisées pour indiquer une ressource de canal attribuée au STA pour une transmission de données par l'AP.

2. Procédé selon la revendication 1, dans lequel l'étape d'envoi (étape 102), lorsqu'il est contrôlé que le canal entier est dans l'état inactif, de la requête demandant d'envoyer une trame au point d'accès, AP, par le biais d'au moins un sous-canal dans le canal, comprend :
exécuter un processus de réduction de puissance lorsqu'il est contrôlé que le canal entier est dans l'état inactif ; et
envoyer la requête demandant d'envoyer une trame à l'AP par le biais d'au moins un sous-canal dans le canal après que le processus de réduction de puissance a pris fin.

3. Procédé selon l'une quelconque des revendications 1 et 2, avant l'étape d'envoi (étape 102), lorsqu'il est contrôlé que le canal entier est dans l'état inactif, la requête demandant d'envoyer une trame au point d'accès AP par le biais d'au moins un sous-canal dans le canal entier, le procédé comprenant en outre :
sélectionner au moins un sous-canal pour envoyer la requête demandant d'envoyer une trame à partir du canal.

4. Procédé selon la revendication 3, dans lequel :
la trame de réponse d'accès est retournée à partir de l'AP au STA par le biais du canal entier ou du sous-canal sélectionné par le STA.

5. Procédé selon l'une quelconque des revendications 1 à 4, comprenant en outre :
envoyer une trame de données, DATA, à l'AP selon la trame de réponse d'accès reçue.

6. Procédé selon la revendication 5, dans lequel l'étape d'envoi de la trame DATA à l'AP selon la trame de réponse d'accès reçue, comprend :
déterminer les informations d'attribution de ressources de canal du STA selon les informations d'identification contenues dans la trame de réponse d'accès reçue ; et si les informations d'attribution de ressources de canal comportent des informations d'indication d'exécuter une transmission de données en utilisant le canal entier, envoyer la trame DATA au point d'accès sur le canal entier, ou
si les informations d'attribution de ressources de canal comportent des informations d'indication d'exécuter une transmission de données en utilisant au moins un sous-canal, envoyer la trame DATA sur l'au moins un sous-canal.

7. Procédé selon l'une quelconque des revendications 5 et 6, dans un cas où la trame DATA nécessite un accusé de réception de l'AP, le procédé comprenant en outre :
recevoir une trame d'accusé de réception envoyée par l'AP par le biais du canal entier ou du sous-canal sélectionné par le STA, la trame d'accusé de réception comportant les informations d'identification de la station, ou la trame d'accusé de réception comportant les informations d'identification de la station et les informations d'identification d'autres stations.

8. Procédé selon l'une quelconque des revendications 1 à 4, comprenant en outre :
si le STA reçoit une trame de réponse d'accès retournée par l'AP et que la trame de réponse d'accès ne comporte pas les informations d'identification et les informations d'attribution de ressources de canal de la station, ou, si la station ne reçoit pas une trame de réponse d'accès retournée par l'AP, déterminer que l'accès au canal a échoué ; et
lorsque l'accès au canal a échoué, le procédé comprenant en outre :
contrôler à nouveau l'état de canal du canal entier.

9. Station, STA, configurée pour exécuter l'un quelconque des procédés selon les revendications 1 - 8.

10. Système d'accès à un canal, comprenant un point d'accès et au moins deux stations selon la revendication 9.
